# EUROPEAN PATENT APPLICATION

(11) **EP 0 763 459 A1**
(43) Date of publication of application: **19.03.1997**
(21) Application number: 96202572.2
(22) Date of filing: 16.09.1996
(51) Int. Cl.: B62D 33/04

(54) **Truck body or trailer with vertically adjustable second platform**

(30) Priority: 18.09.1995 IT RE950052
(71) Applicant: Sadepan Legno S.r.l., 46019 Viadana, Mantova (IT)
(72) Inventor: Bertora, Roberto, 46019 Viadana, Mantova (IT); Torresani, Ersilio, 46019 Viadana, Mantova (IT)
(74) Representative: Corradini, Corrado

(57) **Abstract**

Truck or trailer for transporting a flexible tank, comprising a load floor (2) on which there rests a tank (5) consisting of a large bag of flexible impermeable material, comprises a horizontal load-bearing platform positioned above said load floor and having a planar shape practically identical to that of said floor, and arranged to slide vertically between a raised position in which it lies at least beyond the position occupied by the upper generating lines of the flexible tank when in its totally or partially filled configuration, and a lowered position in which it rests on the load floor immediately above the flexible tank when in its flattened configuration spread on the load floor.

## Description

This invention relates to a truck body, or a trailer, the load floor of which is arranged to receive a flexible tank for containing a liquid material.

A typical use is in transporting liquid chemical products, for example glue for wood working.

Said tanks consist of a bag having at least one mouth provided with suitable valve means, through which said products are fed into and extracted from the bag.

Trucks and trailers for transporting said tanks suffer from the problem that their loading capacity can be utilized only partly, and sometimes not at all, when the bag is empty.

In this respect, when the bag has been emptied, for example after delivering a liquid product, in order to load other material for the return journey it is necessary to fold up the tank by hand onto one end of the floor in order to make a loading region available.

Such operations on the one hand are relatively lengthy, heavy and uncomfortable, and on the other hand do not allow the entire loading capacity of the floor to be used, with obvious economic consequences.

Furthermore, once said material has been unloaded and the flexible tank is to be again used, the tank has to be again extended by climbing onto the floor.

In addition to this a load floor with an empty tank cannot be used when the material to be loaded is loose or has a precarious vertical stability, because any untimely movement of the load could damage the tank. Consequently in such situations the truck has to travel empty.

The main object of the present invention is to provide means able to eliminate the aforestated drawbacks within the context of a simple and rational construction.

According to the invention, said means comprise a horizontal load-bearing platform positioned above the transporter load floor and having a planar shape practically identical to that of said floor, and arranged to slide vertically between a raised position in which it lies at least beyond the position occupied by the upper generating lines of the flexible tank when full, and a lowered position in which it lies immediately above the flexible tank in its flattened configuration spread on the load floor.

By this means the transporter can transport materials or products both when the tank is empty and when it is full.

The upward and downward travel of said load-bearing platform are preferably achieved by a series of perimetral cylinder-piston units interposed between said platform and said load floor, said cylinder-piston units preferably being of the type having their rod in the form of several telescopic portions. Alternatively said upward and downward travel can be achieved by a single cylinder-piston unit fixed below the platform, preferably parallel to the longitudinal axis of this latter, to the head of its rod there being fixed the ends of a series of flexible elements the other ends of which, after suitable deviation of said flexible elements at the edges of the platform, are connected to fixed points situated above the height of maximum lift of the platform.

Said flexible elements are preferably metal ropes or cables, or chains.

Said platform is lowerly provided with supports arranged to rest along the longitudinal edges of the load floor, or on its cross-members, when it is lowered.

Again, along at least the longitudinal edges of the platform there are preferably provided locking means arranged to lock the platform to the lateral walls of the transporter when said platform, with possibly a material loaded thereon, is positioned above said completely or partly filled flexible tank.

For example said means can consist of pawls or bolts controlled by respective cylinder-piston units, and associated with respective vertical rack bars fixed onto the inner faces of said lateral walls.

Finally, interchangeable guide and slide pads are preferably interposed between the platform sides and the transporter lateral containing walls.

The characteristics and constructional merits of the invention will be more apparent from the description given hereinafter with reference to the figures of the accompanying drawings, which illustrate two particular embodiments thereof by way of nonlimiting example.
Figure 1 is a lateral elevation, with parts cut away, of a first embodiment of the invention.
Figure 2 is a section on the line II-II of Figure 1, showing the invention with the flexible tank full.
Figure 3 is a view similar to the preceding, but showing the flexible tank empty.
Figure 4 is part of the section on the line IV-IV of Figure 3 to an enlarged scale.
Figure 5 is an interrupted lateral schematic view of an alternative embodiment of the invention.
Figure 6 is a schematic interrupted view of Figure 5, with parts cut away.

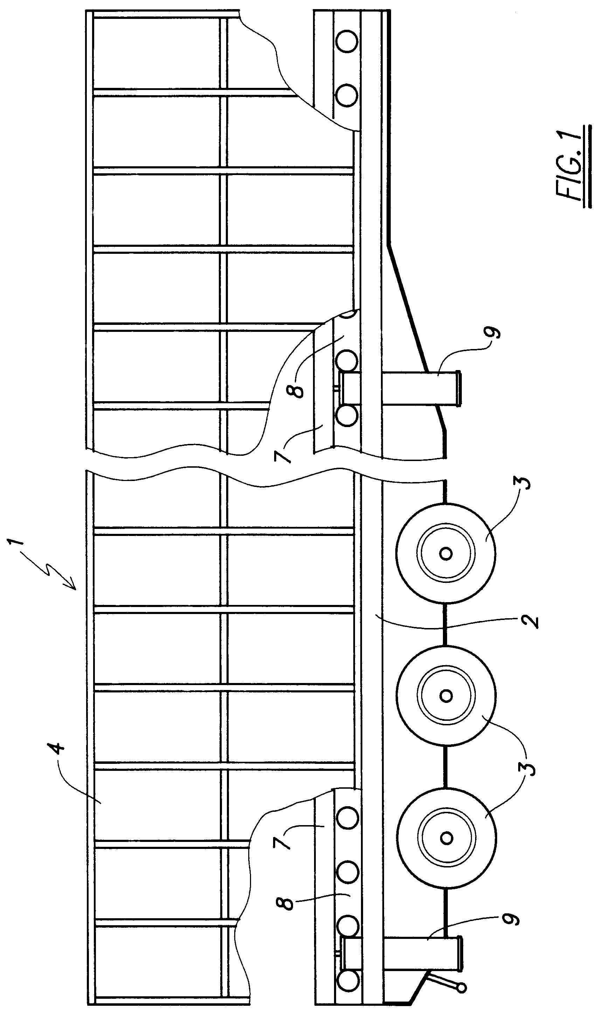

Figures 1 to 3 show a semitrailer 1 to be coupled to a convenient towing means, not shown, such as a truck.

The semitrailer 1 comprises a load floor 2 mounted on wheels 3 and provided with two sides 4.

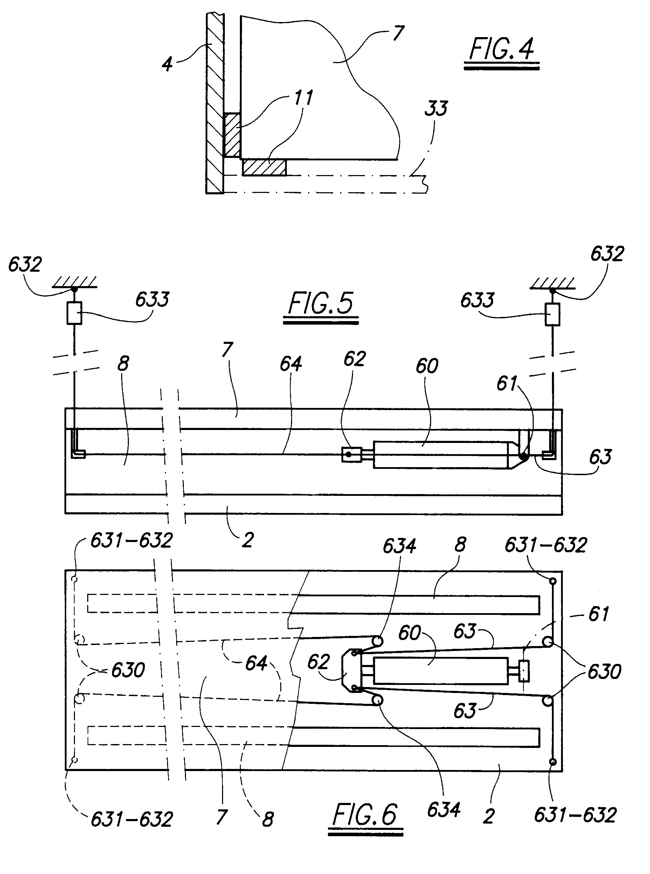

In the illustrated example said sides 4 have a height of about 2.0 m, and at their ends there can be provided two transverse containing walls, one of which, indicated by 33, is shown by dashed and dotted lines in Figure 4.

If provided, said transverse walls (or only one of them) are formed in such a manner as to enable personnel and loading means to gain access to the floor 2 and to the means described hereinafter.

Said access can also be provided through the sides 4.

As can be seen, on said floor 2 there is positioned a flexible tank 5, of known type, consisting of an elongate bag formed of an impermeable flexible material.

Said bag has a planar shape which can be inscribed within the perimeter of the floor 2, said bag being provided with at least one filling and emptying mouth 6 with a relative closure valve.

According to the invention, with said floor 2 there is associated a vertically movable overlying load-bearing platform 7 with dimensions substantially equal to those of the useful surface of the floor 2.

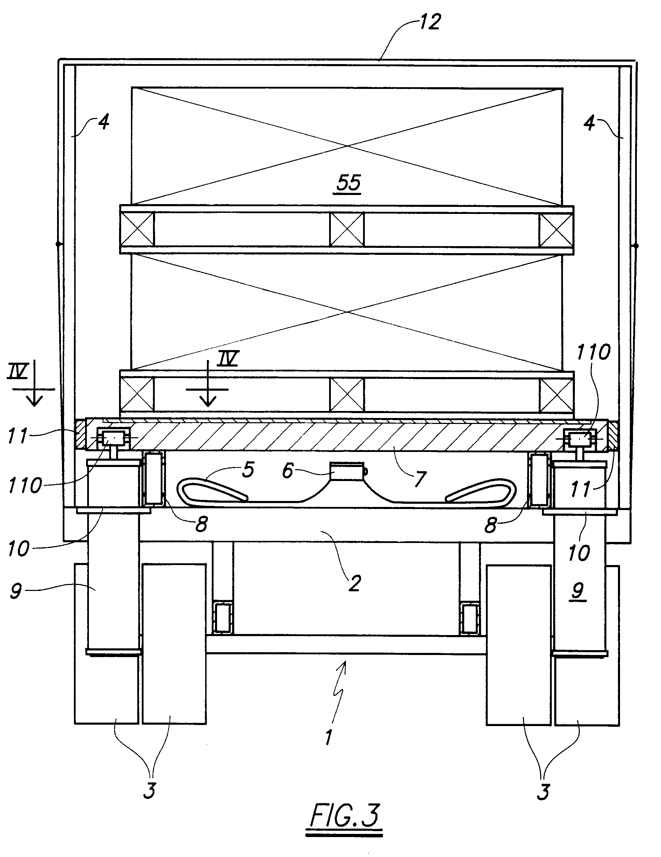

The platform 7 is lowerly provided with two longitudinal members 8 arranged to rest on the floor 2 when the tank 5 is not in use (see Figure 3). Said longitudinal members can be securely fixed to the floor 2.

In the embodiment shown in Figures 1 to 3, the upward and downward travel of the platform 7 are achieved by at least four hydraulic cylinder-piston units 9 positioned in proximity to the platform corners.

Specifically, said cylinder-piston units 9 are of the type with a multiple telescopic rod, their cylinder being fixed to an intermediate plate 10 and their most inner rod portion being fixed at 110 to the platform 7.

Along the perimetral edge of the platform 7 there is preferably provided a series of interchangeable lateral guide and slide pads 11.

Said pads are formed of a convenient material of low coefficient of friction, such as polyzene.

The semitrailer 1 is also preferably provided with a covering element 12, which in the illustrated example is in the form of a tarpaulin.

In the alternative embodiment shown in Figures 5 and 6, the upward and downward travel of the platform 7 are achieved by a single cylinder-piston unit, indicated by 60.

Said cylinder-piston unit 60 is positioned below the platform 7 parallel to its longitudinal axis, and has its body hinged to the platform along a transverse axis. At the end of the rod of the cylinder-piston unit 60 there is a plate 62 to which the ends of four flexible elements are coupled, of which two 63 extend towards the front of the platform 7 and the other two 64 extend towards the rear thereof.

Said flexible elements 63 and 64 can consist of metal ropes or cables or the like, such as chains.

Each individual flexible element is deviated about a first deviation element 630, which in the illustrated example is a pulley, and about a second perpendicular deviation element 631, which in the illustrated example is a right-angled guide, said first and second deviation elements being associated with the platform 7.

Each flexible element 63 also extends above the platform 7 where its opposite end is coupled to a fixed point 632 of the semitrailer 1.

For example said fixed point 632 is provided at the top of the sides 4.

Finally, below said fixed point 32 the flexible element 63 is provided with an adjustable tensioning unit 633 (see Figure 5).

In addition to the aforedescribed members relating to the flexible element 63, the flexible elements 64 each comprise a further deviation means, indicated by 634 in Figure 6, which in the illustrated example is in the form of a pulley.

Lastly it should be noted that more than two pairs of flexible elements can be provided.

For transporting liquid material the platform 7 is raised completely to enable personnel to walk on the load floor for operating the filling valves, said material then being fed into the tank 5.

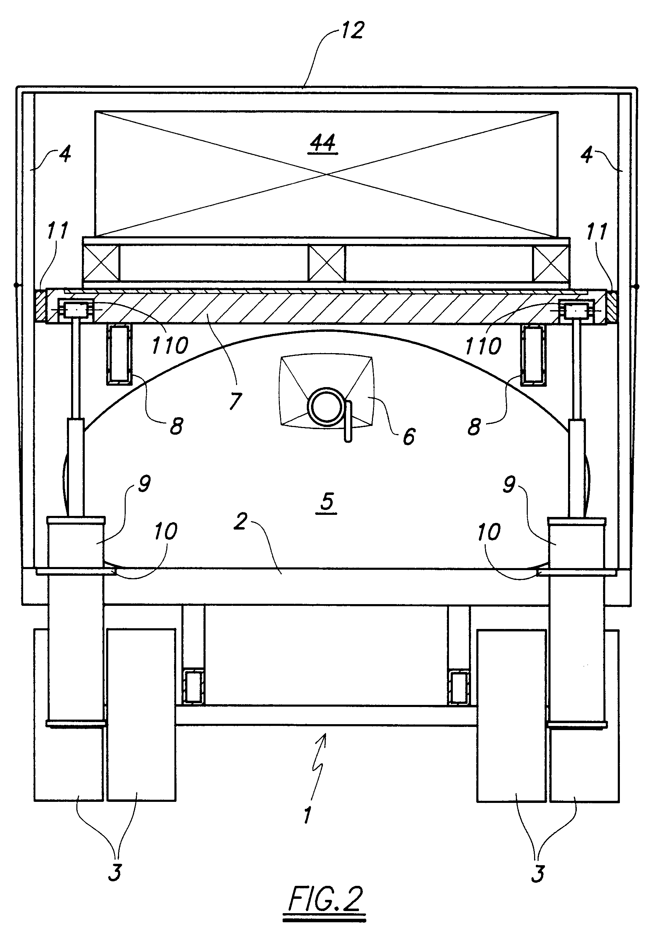

The platform is then immediately lowered into the position shown in Figure 2.

In this position light material 44 can be transported positioned on the platform.

To transport materials which do not require the use of the tank 5, in the initially illustrated embodiment the platform 7 is raised to its maximum level, ie as far as the top of the sides 4. The personnel then climb onto the floor 2 to fold the longitudinal edges of the empty tank 5 back on themselves, after which the platform 7 is lowered as shown in Figure 3, and finally the material 55 to be transported is arranged on this latter.

It should be noted that suitable reference marks are to be provided on the floor 2, such as coloured longitudinal stripes for informing personnel of the maximum transverse dimension allowable for the empty tank 5 with its edges folded over, in order to prevent the longitudinal members 8 resting on said edges. Although not shown, for reasons of safety the invention is preferably provided with locking means to prevent accidental descent of the platform 7.

Said means can for example comprise a series of toothed vertical bars resting on the load floor and fixed to the sides 4, and with which there are associated respective facing pawls or bolts arranged on the platform and provided with an operating device such as a cylinder-piston unit.

It should further be noted that on reusing the tank 5 the longitudinal edges of the bag automatically extend during its filling.

The invention is not limited to that illustrated and described, but covers all technical equivalents of the stated means and their combinations, if implemented within the context of the following claims.

## Claims

1. A truck or trailer for transporting a flexible tank, comprising a load floor (2) on which there rests a tank (5) consisting of a large bag of flexible impermeable material, characterised by comprising a horizontal load-bearing platform positioned above said load floor and having a planar shape practically identical to that of said floor, and arranged to slide vertically between a raised position in which it lies at least beyond the position occupied by the upper generating lines of the flexible tank when in its totally or partially filled configuration, and a lowered position in which it rests on the load floor immediately above the flexible tank when in its flattened configuration spread on the load floor.

2. A truck or trailer as claimed in claim 1, characterised by comprising walls perimetral to the load floor.

3. A truck or trailer as claimed in claim 2, characterised by comprising a cover supported by said perimetral walls.

4. A truck or trailer as claimed in claim 1, characterised in that the upward and downward travel of said load-bearing platform are achieved by a perimetral series of perpendicular cylinder-piston units.

5. A truck or trailer as claimed in claim 1, characterised in that the upward and downward travel of said load-bearing platform are achieved by a single cylinder-piston unit (60) which is fixed below said platform and has coupled to the head of its rod the ends of a series of flexible elements (63) and (64), the opposite ends of which, after the elements (63) and (64) have been deviated along the marginal edges of the platform, are coupled to the top of the perimetral walls of the floor.

6. A truck or trailer as claimed in claim 5, characterised in that said flexible elements (63, 64) consist of metal ropes or cables, or chains.

7. A truck or trailer as claimed in claims 5 and 6, characterised in that an adjustable tensioning unit (633) is interposed along each individual flexible element (63, 64).

8. A truck or trailer as claimed in claim 1, characterised in that said load-bearing platform is provided lowerly with supports (8) arranged to rest along the longitudinal edges of the load floor.

9. A truck or trailer as claimed in claim 8, characterised in that said supports (8) are fixed to the floor (2).

10. A truck or trailer as claimed in the preceding claims, characterised in that interchangeable slide and guide pads (11) are interposed between the sides of said platform and the inner faces of said perimetral walls of the floor.

11. A truck or trailer as claimed in claim 1, characterised in that safety means are provided along the longitudinal edges of said load-bearing platform to prevent undesired descent of the platform, they comprising means for locking the platform to the perimetral walls of the floor.

12. A truck or trailer as claimed in claim 11, characterised in that said safety means consist of bolts operated by respective cylinder-piston units, and associated with vertical rack-type bars which rest on the load floor and are fixed to the inner faces of said perimetral walls.
